# FASCICULE DE BREVET EUROPEEN

(11) **EP 2 894 213 B1**
(45) Date de publication et mention de la délivrance du brevet: **31.10.2018**
(21) Numéro de dépôt: 14307120.7
(22) Date de dépôt: 22.12.2014
(51) Int. Cl.: C10G 11/18

(54) **PROCÉDÉ DE CRAQUAGE CATALYTIQUE PERMETTANT UNE VALORISATION AMÉLIORÉE DES CALORIES DES FUMÉES DE COMBUSTION.**
KATALYTISCHES KRACKVERFAHREN, DAS EINE VERBESSERTE VERWERTUNG DER KALORIEN VON VERBRENNUNGSABGASEN ERMÖGLICHT
CATALYTIC CRACKING METHOD FOR IMPROVED USE OF THE CALORIES FROM COMBUSTION FUMES

(30) Priorité: 10.01.2014 FR 1450194
(43) Date de publication de la demande: 15.07.2015
(73) Titulaire: IFP Energies nouvelles, 92500 Rueil-Malmaison (FR)
(72) Inventeur: Feugnet, Frederic, 69004 Lyon (FR); Besnault, Jean-Michel, 78110 Le Vesinet (FR); Briot, Patrick, 38260 Pommier de Beaurepaire (FR)
(74) Mandataire: IFP Energies nouvelles

(56) Documents cités:
- WO-A1-2005/100511
- US-A- 4 272 402
- US-A- 4 814 068
- US-A- 5 198 194
- US-A1- 2009 035 191

## Description

### DOMAINE DE L'INVENTION

La présente invention se situe dans le domaine du craquage catalytique de coupes pétrolières. L'unité de craquage catalytique d'une raffinerie a pour objectif principal la production de bases pour essence, c'est à dire de coupes ayant un intervalle de distillation compris entre 35°C et 250°C.

Dans une unité de craquage catalytique (notée FCC), le bilan thermique est assuré par la combustion du coke déposé sur le catalyseur pendant l'étape de réaction. Cette combustion a lieu dans la zone de régénération par injection d'air via un compresseur dénommé compresseur principal d'air (en abrégé MAB, abréviation de la terminologie anglo-saxonne de "main air blower").

Typiquement, le catalyseur entre dans la zone de régénération avec une teneur en coke (définie comme la masse de coke sur la masse de catalyseur) comprise entre 0,5 % et 1%, et ressort de ladite zone avec une teneur en coke inférieure à 0,01%. Lors de cette étape, des fumées de combustion sont générées et sortent de la zone de régénération à des températures comprises entre 640°C et 800°C. Ces fumées vont ensuite en fonction des configurations de l'unité subir un certains nombres de post traitements afin :
- de récupérer une section de leur chaleur dans le but de produire de la vapeur,
- de les débarrasser des particules solides dénommées fines et provenant du catalyseur,
- de les épurer des composés azotés et soufrés (désignés sous les termes génériques de NOx et SOx).

A la suite de ces étapes, les fumées de combustion peuvent être émises dans l'atmosphère via une cheminée de la raffinerie en respectant les normes environnementales en vigueur.

La vapeur produite par récupération de la chaleur des fumées se répartit en trois niveaux thermiques différents et par conséquence en trois niveaux de pression différents.

On distingue ainsi la production de vapeur dite haute pression (HP), moyenne pression (MP) et basse pression (BP).
- La vapeur haute pression se situe généralement dans une gamme de température comprise entre 380 et 450°C pour une plage de pression entre 45 et 100 bars (1 bar =10⁵ Pa).
- La vapeur moyenne pression sera plutôt dans une plage de température de 220 à 350°C pour une gamme de pression entre 15 et 40 bars.
- La vapeur basse pression quant à elle se situe dans une fourchette de températures plus basses comprise entre 170 et 250°C pour un niveau de pression compris entre 2,5 et 10 bars.
- Ces fourchettes peuvent varier sensiblement en fonction de la raffinerie considérée et de son réseau d'utilités.

La vapeur haute pression de niveau thermique le plus élevé est la plus recherchée dans la mesure où elle permet d'être une source de chaleur chaude pour une plus large gamme de flux du procédé, plus que la vapeur moyenne pression, elle-même plus intéressante que la vapeur basse pression dont les débouchés restent limités dans la raffinerie de par son bas niveau thermique limitant ainsi son utilisation en tant que source chaude.

La charge d'une unité de FCC est généralement constituée d'un hydrocarbure ou d'un mélange d'hydrocarbures contenant essentiellement (c'est à dire au moins 80%) de molécules dont le point d'ébullition est supérieur à 340°C. Cette charge principale contient en outre des quantités de métaux (Ni+V) limitées, en concentration généralement inférieure à 50 ppm, préférentiellement inférieures à 20 ppm, et une teneur en hydrogène en général supérieure à 11 % poids, typiquement comprise entre 11,5% et 14,5%, et préférentiellement comprise entre 11,8% et 14% poids.

La teneur en Carbon Conradson de la charge (noté CCR en abrégé et défini par la norme ASTM D 482) fournit une évaluation de la production de coke au cours du craquage catalytique. En fonction de la teneur en Carbon Conradson de la charge, le rendement en coke nécessite un dimensionnement spécifique de l'unité pour satisfaire le bilan thermique.

Ainsi, lorsque la charge présente un CCR conduisant à une teneur en coke supérieure à celle requise pour assurer le bilan thermique, l'excédent de chaleur doit être évacué. Ceci peut se faire par exemple, et de manière non exhaustive, par l'installation d'un catcooler, échangeur bien connu de l'homme du métier, qui réalise un refroidissement externe d'une fraction du catalyseur contenu dans le régénérateur par échange avec de l'eau, conduisant ainsi à la production de vapeur haute pression.

Inversement, dans certains cas, notamment avec les charges légères de type naphta, la charge traitée au FCC présente un défaut de coke, et le bilan thermique doit être complété par ajout d'une source de chaleur complémentaire. Ceci peut être mise en oeuvre de différentes manières connues de l'homme du métier, comme par exemple l'augmentation de la préchauffe de la charge, qui entraîne une augmentation de la taille du four de préchauffe et de la consommation de l'utilité associée, ou par l'ajout au niveau du régénérateur d'une coupe issue du FCC à fort potentiel de coke, dite coupe cokante qui est généralement la coupe "slurry", c'est à dire une coupe 360°C+ à dominante aromatique, ou toute coupe hydrocarbonée telle que du fioul N°2 ou du fuel domestique.

Ce recyclage d'une coupe "slurry" ou d'une coupe fuel N°2 au régénérateur est problématique car, compte tenu des températures régnant dans le régénérateur, de l'ordre de 650°C à 750°C, une section de ce recycle se vaporise formant des gaz craqués qui vont se retrouver dans la phase diluée du régénérateur en risquant ainsi de créer des points chauds dommageables au bon fonctionnement de l'unité.

Ce phénomène, appelé "afterburning", peut se définir comme une reprise de combustion en un point non souhaité de l'unité, notamment en entrée de cyclone.

Par ailleurs, ce flux de recycle risque de brûler dans le lit de catalyseur en formant localement un front de flamme à haute température qui fait subir au catalyseur de fortes températures locales (points chauds). Ces fortes températures locales, combinées à la présence de vapeur d'eau fragilisent la partie active du catalyseur (zéolite) et désactivent ainsi sa fonction craquante.

Les coupes lourdes traitées au FCC peuvent notamment provenir de la distillation atmosphérique, de la distillation sous vide, d'unité d'hydroconversion, d'unité de coking, d'unité d'hydrotraitement ou de désalphatage, mais avoir aussi une origine de type biomasse comme par exemple les huiles végétales ou la cellulose.

L'intérêt de la présente invention consiste à préchauffer l'air de combustion à la sortie du compresseur principal d'air (MAB) avec les fumées de combustion.

Cette mise en oeuvre particulière permet ainsi de transférer une partie de la production de vapeur basse pression (BP) en vapeur haute pression (HP) et/ou de limiter les utilités du procédé telles que le fuel oil ou fuel gaz ou coupe cokante, en améliorant ainsi l'efficacité énergétique de l'unité.

### EXAMEN DE L'ART ANTERIEUR

La chaine d'échange de chaleur sur les fumées de combustion prises en sortie du régénérateur d'une unité de craquage catalytique comprend classiquement une chaudière de génération de vapeur dite chaudière de récupération ("waste heat boiler") et un échangeur dit économiseur qui permet de générer de la vapeur basse pression et de l'eau surchauffée.
- Le brevet US 3,769,203 décrit le préchauffage de la charge à la température requise avant son introduction dans le riser.
- Le brevet US 7,491,315 décrit une préchauffe indirecte de la charge par les fumées en provenance du régénérateur.
- Les brevets US 3,838, 038 et US 6,558, 531 décrivent une augmentation de la température du catalyseur dans la ligne de transfert conduisant du stripage au régénérateur.
- Le document US 2009/035191 A1 décrit un procédé de craquage catalytique comprenant une section de récupération des produits permettant de séparer les effluents gazeux, le régénérateur se trouvant en communication avec ladite section de récupération des produits. L'enseignement de D1 est très vague et ne permet pas de retrouver le positionnement très particulier de l'échangeur (AHP) sur les fumées de combustion selon notre invention.

### DESCRIPTION SOMMAIRE DE LA FIGURE

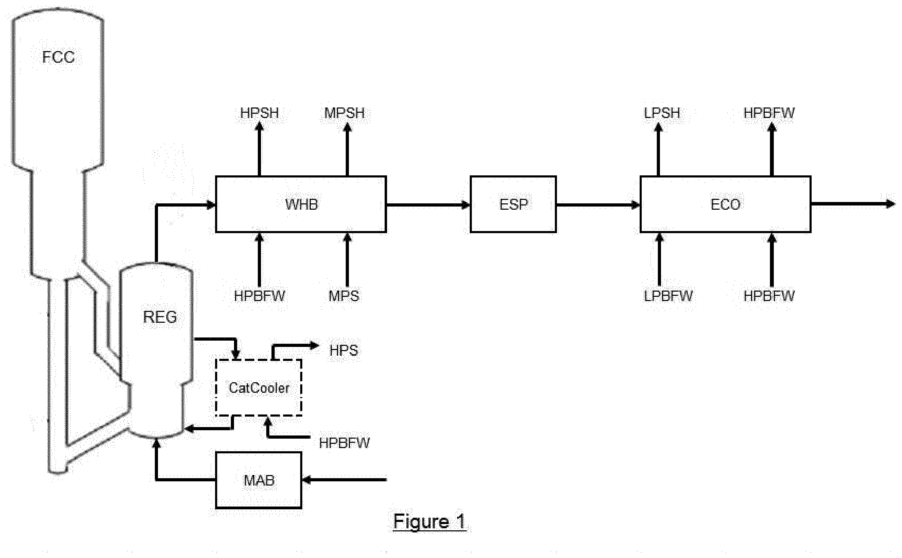

La figure 1 représente le train d'échange de chaleur des fumées de combustion selon l'art antérieur, ainsi que le circuit de l'air de combustion jusqu'à son entrée dans le régénérateur. Les fumées de combustion quittent le régénérateur (REG) et entre dans la chaudière de récupération (WHB) qui permet de générer de la vapeur haute pression surchauffée (HPSH) à partir d'eau d'alimentation sous pression (HPBFW) et de la vapeur moyenne pression surchauffée (MPSH) à partir de vapeur moyenne pression (MPS).

Les fumées entrent ensuite dans le précipitateur électrostatique (ESP) puis dans un échangeur dit "économiseur" qui produit de la vapeur basse pression surchauffée (LPSH) à partir d'eau à basse pression (LPBFW) et de l'eau haute pression surchauffée (HPBFW) à partir d'eau à haute pression.

Sur la figure 1 on a également représenté l'échangeur sur solide fluidisé dit "cat cooler" qui permet de générer de la vapeur haute pression (HPS) à partir d'eau à haute pression(HPBFW).

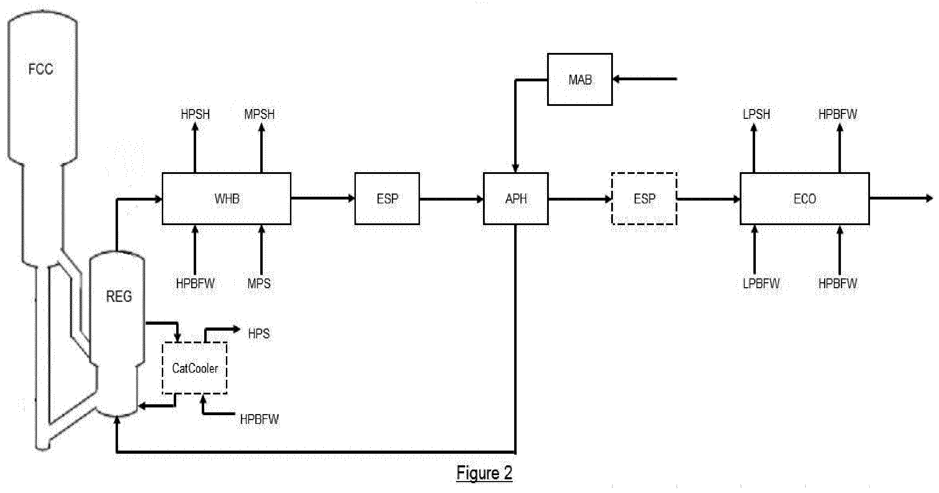

La figure 2 représente le train d'échange de chaleur sur les fumées de combustion selon l'invention.

Le nouvel échangeur est noté APH. Il permet de préchauffer l'air de combustion en aval du compresseur (MAB) au moyen des fumées prises entre le précipitateur électrostatique (ESP) et l'économiseur (ECO). Le reste du schéma est identique à celui de la figure 1.

### DESCRIPTION SOMMAIRE DE L'INVENTION

La présente décrit par la revendication 1 tient essentiellement dans un nouvel échange thermique sur la ligne de récupération de la chaleur des fumées de combustion. Cet échange se fait entre les fumées du régénérateur prises en aval de la chaudière de récupération (dite "weast heat boiler" dans la terminologie anglo saxonne de l'homme du métier et notée WHB), et en amont ou en aval du dépoussiéreur électrostatique (ESP) d'une part, et l'air de combustion en aval du compresseur d'autre part. De préférence le nouvel échange thermique est effectué sur les fumées de combustion prises entre le précipitateur électrostatique (ESP) et 1 'échangeur appelé économiseur (ECO).

Cet échange thermique est réalisé au moyen d'un échangeur qui peut être de tout type connu de l'homme du métier tel qu'un échangeur à plaques, ou un échangeur à tubes structurés ou encore un échangeur de type rotatif.

La température de l'air de combustion en aval du compresseur est dans les schémas de l'art antérieur une résultante entre la température ambiante et le facteur de compression nécessaire pour amener l'air à la pression du régénérateur. Cette température se situe généralement entre 110°C et 300°C, préférentiellement 150-250°C°C. Avec le nouvel échange thermique selon l'invention, l'air de combustion est porté entre 200 et 350°C et préférentiellement entre 250°C et 300°C.

Par ce nouvel échange thermique, on transfère les calories portées par les fumées du régénérateur à l'intérieur même du régénérateur par l'intermédiaire de l'air de combustion entrant.

Ces calories se retrouvent ainsi à haut niveau thermique, la température du régénérateur se situant typiquement autour de 700°C/ 800°C.

Dans le cas général de charges relativement cokante et nécessitant donc la mise en place d'un échangeur externe fonctionnant sur un circuit de dérivation du catalyseur contenu dans le régénérateur, échangeur appelé "cat cooler", pour maintenir le bilan thermique du FCC, cet l'excès de chaleur est évacué par production de vapeur haute pression via ledit "catcooler".

Le "cat cooler" est un échangeur en lit fluidisé qui fonctionne à partir des calories directement contenues sur le catalyseur chaud (600°C à 700°C) en cours de régénération et qui permet de produire de la vapeur haute pression (HPS).

Ainsi au lieu de produire de la vapeur basse pression comme dans l'économiseur, le nouvel agencement permet de produire un supplément de vapeur haute pression à un niveau thermique plus élevé que la vapeur basse pression produite selon l'art antérieur, et donc permet des échanges thermiques en utilisant cette vapeur haute pression en tant que source chaude, bien plus important qu'avec de la vapeur basse pression.

Dans le cas de charges peu cokantes pour lesquelles le bilan thermique est assuré par une source de chaleur externe (ex fuel oil pour préchauffer la charge), l'apport supplémentaire de chaleur résultant du nouvel échange thermique selon l'invention permet de réduire la consommation de ladite source de chaleur externe.

Ainsi au lieu de produire de la vapeur basse pression et de consommer du fuel oil, on ne produit plus de vapeur basse pression mais on économise du fuel oil. Là encore, l'agencement selon la présente invention permet de monter le niveau thermique de l'utilité générée par rapport au schéma d'intégration selon l'art antérieur.

En résumé, l'agencement selon la présente invention permet de mieux valoriser la chaleur des fumées de combustion en produisant une utilité d'un niveau thermique plus élevé et donc plus facilement valorisable que selon le schéma de l'art antérieur.

De façon plus précise, la présente invention peut être vue comme un procédé de craquage catalytique de coupes lourdes de type VGO ou résidu atmosphérique, de Carbon Conradson allant de 0,1 (voire même à une valeur inférieure à 0,1), à des valeurs supérieures à 0,4 et préférentiellement supérieur à 0,5, procédé utilisant une unité de craquage catalytique en lit fluidisé comportant une section réactionnelle en écoulement ascendant ou en écoulement descendant, et une section de régénération du catalyseur qui consiste en une combustion du coke déposé sur le catalyseur dans la section réactionnelle au moyen d'air de combustion, ledit procédé étant caractérisé en ce que ledit air de combustion est préchauffé à une température comprise entre 200 et 350°C et préférentiellement entre 250°C et 300°C au moyen d'un échange de chaleur sur les fumées de régénération prises en aval de la chaudière de récupération et en amont de l'économiseur, fumées de combustion disponibles à cette localisation à une température comprise entre 300°C et 650°C, l'excédent de calories apportées par l'air de combustion étant converti en vapeur haute pression HP comprise entre 45 bars et 100 bars, et préférentiellement comprise entre 50 et 70 bars, au niveau de l'échangeur externe sur catalyseur chaud prélevé au régénérateur appelé "cat cooler".

L'unité de craquage catalytique peut fonctionner aussi bien en écoulement ascendant (dit "riser" dans la terminologie anglo saxonne) qu'en écoulement descendant (dit "dropper" dans la terminologie anglo saxonne).
- Lorsque l'unité de craquage catalytique fonctionne en écoulement ascendant, les conditions opératoires sont les suivantes, aussi bien pour le cas a) que pour le cas b) :
   - Température sortie riser comprise entre 520°C et 600°C,
   - Rapport C/O compris entre 6 et 14, et préférentiellement compris entre 7 et 12,
   - Temps de résidence compris entre 1 et 10 s, et préférentiellement compris entre 2 et 6 s.
- Lorsque l'unité de craquage catalytique fonctionne en écoulement descendant, les conditions opératoires sont les suivantes :
   - Température de sortie du réacteur comprise entre 580°C et 630°C,
   - Rapport C/O compris entre 15 et 40, et préférentiellement compris entre 20 et 30,
   - Temps de résidence compris entre 0,1 et 1 s, et préférentiellement compris entre 0,2 et 0,7 s.

Le rapport C/O est le rapport du débit massique de catalyseur en circulation dans l'unité sur le débit massique de charge à l'entrée de l'unité.

Le temps de résidence est défini comme le volume du riser (m3) sur le débit volumique de charge (m3/s).

### DESCRIPTION DETAILLEE DE L'INVENTION

La présente invention s'applique aussi bien à des unités de FCC utilisant un réacteur fonctionnant en courant ascendant (appelé "riser" dans la terminologie anglosaxonne), qu'à des unités utilisant un réacteur fonctionnant à courant descendant (appelé "downer" dans la terminologie anglosaxonne).

La présente invention s'applique également à des unités FCC fonctionnant avec un seul réacteur (en écoulement ascendant ou en écoulement descendant), et à des unités FCC fonctionnant avec deux réacteurs.

La présente invention consiste dans un schéma de procédé de craquage catalytique permettant une meilleur valorisation de la récupération de la chaleur des fumées de combustion afin de maximiser la production de vapeur haute pression et /ou de limiter les utilités de l'unité telles que (et de manière non exhaustive) fuel oil, fuel gaz, coupe aromatique cokante.

La présente invention peut se définir comme une préchauffe de l'air de combustion en aval du MAB par échange thermique avec les fumées de combustion issues de la régénération et/ou d'autres sources de calories de niveau thermique compatible avec un échange avec cet air de combustion.

Les calories des fumées de combustion sortant de la section de régénération ou d'autres sources comme par exemple les fumées du four de la colonne de distillation atmosphérique, ou de la colonne de distillation sous vide, sont transmises à l'air de combustion par échange thermique conventionnel à la sortie du compresseur d'air.

Ces calories sont alors transmises au catalyseur dans le régénérateur puisque l'air de combustion et le catalyseur sont directement mis en contact à haut niveau thermique (température comprise entre 600°C et 800°C).

L'excès de chaleur introduit par la préchauffe de l'air de combustion peut alors être converti en vapeur haute pression, par exemple via un "cat cooler" afin de continuer à assurer le bilan thermique de l'unité. Au final, la préchauffe de l'air de combustion décrite dans la présente invention permet de produire davantage de vapeur haute pression par rapport à un schéma d'intégration des fumées de combustion conventionnel. Ceci apparaitra mieux à la lecture des exemples comparatifs qui suivent (exemples 1 et 2 et exemples 3 et 4).

La vapeur recherchée étant de la vapeur haute pression à haut niveau thermique comme expliqué précédemment, les fumées sortant du générateur serviront au maximum à produire de la vapeur haute pression par échange avec de l'eau ou de la vapeur moyenne pression.

Dès que le niveau thermique des fumées ne permet plus de générer de la vapeur haute pression, l'échange bascule sur l'air de combustion. Enfin, après l'échange avec l'air de combustion, les calories restantes des fumées de niveau thermique inférieur servent en dernière étape à générer de la vapeur basse pression.

Le non-respect de la localisation précise de cette cascade d'échange entre les fumées du régénérateur et l'air de combustion ne permet pas d'optimiser au mieux la production globale de vapeur haute pression et donc d'optimiser au mieux l'éco-efficience du procédé.

Une préchauffe de l'air en amont du compresseur ne présente pas d'intérêt dans la mesure où le débit volumique à l'aspiration de cet équipement va considérablement augmenter ce qui a pour conséquence non seulement d'augmenter le coût du compresseur, mais surtout d'augmenter la consommation de l'utilité associée pour le faire fonctionner (électricité, vapeur haute pression...) limitant voire annulant complètement le gain énergétique escompté. L'ajout du préchauffeur d'air en aval du compresseur aura également un impact sur l'hydraulique du circuit mais reste suffisamment faible pour observer des gains énergétique.

L'apport supplémentaire de chaleur via les fumées de combustion peut également permettre de réduire dans une certaine mesure la préchauffe de la charge réalisée la plupart du temps via un four fonctionnant sur fuel oil ou sur gaz naturel, ce qui permet ainsi de réduire les utilités du procédé améliorant ainsi son éco-efficience.

Le schéma selon la présente invention peut également être mise en oeuvre dans le cas d'unité de craquage catalytique dont le bilan thermique ne peut être assuré uniquement par échange de chaleur entre la zone de régénération et la zone de réaction. Dans ce cas, l'échange réalisé entre les fumées de combustion et l'air de combustion au régénérateur permet d'économiser la source de chaleur utilisée afin de boucler le bilan thermique et ainsi d'améliorer l'éco-efficience globale de l'unité.

La source de chaleur économisée peut être de manière non exhaustive :
- du fuel gas ou du fuel oil dans le cas où le bouclage est assuré par une préchauffe renforcée de la charge,
- une coupe additionnelle riche en composés aromatiques injectée dans le stripper ou dans une capacité additionnelle du stripper, tel que décrit par exemple dans le brevet US 2013/8,551,324
- du torch oil ou une coupe à fort potentiel cokant usuellement introduite dans le régénérateur, évitant ainsi les phénomènes d'afterburning et de dégradation du catalyseur tel que décrit précédemment.

### EXEMPLES COMPARATIFS

Afin d'illustrer l'effet recherché par la présente invention, nous avons considéré un premier exemple dit "cas de base d'une unité fonctionnant en excès de coke" correspondant à une unité de craquage catalytique (FCC) traitant une charge produisant davantage de coke que requis par le bilan thermique. L'excédent de chaleur associé est évacué par un catcooler afin de produire de la vapeur haute pression.

Dans ce cas de base, l'intégration thermique des fumées correspond à un schéma conventionnel.

L'exemple 2 traité correspond à la même unité mais cette fois avec une intégration thermique des fumées de combustion correspondant à la mise en oeuvre selon la présente invention. L'exemple 3 dit « cas de base d'une unité fonctionnant en défaut de coke » illustre le cas de référence d'un FCC dont les conditions opératoires ne permettent pas d'assurer le bilan thermique.

Le bilan thermique est dans ce cas réalisé en préchauffant davantage la charge via un four fonctionnant au fuel oil. Dans cet exemple 3, l'intégration thermique des fumées est réalisée selon un schéma conventionnel, l'unité ne possède évidemment pas de catcooler.

L'exemple 4 reprend l'exemple 3 mais avec la mise en oeuvre selon l'invention.

Dans tous les exemples les conditions de pression température des différents vapeurs générées sont les suivantes :

| | Pression bar g | Température °C |
|---|---|---|
| Vapeur haute pression | 44,9 | 385 |
| Vapeur moyenne pression | 21,8 | 290 |
| Vapeur basse pression | 4,0 | 230 |

### Exemple1 (selon l'art antérieur) : cas de base d'une unité fonctionnant en excès de coke

Dans l'exemple considéré, les fumées arrivent à une température de 675°C en amont de la chaudière de récupération avec un débit massique de 295 tonnes par heures et sont successivement dirigées vers :
1- une unité de génération de vapeur dite chaudière de récupération, permettant de générer de la vapeur haute et moyenne pression. A la fin de cette étape, les fumées sortent à 340°C.
2- un électro précipitateur afin de les dépoussiérer.
3- un economiseur1 qui permet de générer de la vapeur basse pression et de préchauffer de l'eau. A la fin de cette étape, les fumées voient leur température passer de 340°C à 200°C afin de conserver un niveau thermique minimal au regard des contraintes des étapes avales de DeNOx et de DeSOx.
4- des unités de DeSOx, DeNOx, qui n'affectent pas le niveau thermique des fumées.
5- un economiseur2 afin de préchauffer l'eau servant à faire de la vapeur haute pression dans la chaudière de récupération.

A la fin de ces différentes étapes, les fumées sortent à 180°C avec les propriétés suivantes :
- SO2 < 10-20 mg/Nm3
- NO2 < 15 mg/Nm3
- NOx < 200 mg/Nm3
- Teneur en fines < 10 mg/Nm3

Avec cet agencement conventionnel les vapeurs haute, moyenne et basse pression sont générées dans les proportions suivantes :

| t/h | Chaudière récup. | Economiseur1 -2 | "Catcooler" |
|---|---|---|---|
| Vapeur haute pression | 86,8 | 0 | Base |
| Vapeur moyenne pression | 6,2 | 0 | 0 |
| Vapeur basse pression | 0 | 17,8 | 0 |

La vapeur haute pression générée par le catcooler correspond à la quantité de chaleur à évacuer du régénérateur afin de boucler le bilan thermique de l'unité.

### Exemple 2 (selon l'invention) : Mise en oeuvre de l'invention dans le cas d'une unité fonctionnant en excès de coke.

Cet exemple correspond à l'agencement de l'invention tel que décrit dans ce texte avec un positionnement du préchauffeur d'air de combustion en aval de l'électro-précipitateur.

Dans ce dernier cas, les fumées sortent de l'ensemble des étapes de postraitement également à 180°C avec les mêmes concentrations en NOx, SOx et teneur en fines que précédemment.

Par conséquent, le schéma selon l'invention n'affecte en rien les performances des post traitements permettant d'amener aux normes légales les fumées en vue de les rejeter dans l'atmosphère.

Dans le schéma selon l'invention, la production de vapeur se répartit comme suit :

| t/h | Waste Heat boiler | Econonµseur1-2 | "Catcooler" |
|---|---|---|---|
| Vapeur haute pression | 86,8 | 0 | Base+6,8 |
| Vapeur moyenne pression | 6,2 | 0 | 0 |
| Vapeur basse pression | 0 | 10,5 | 0 |

Selon la présente invention, 6,8 tonnes de vapeur haute pression additionnelles sont produites par transfert de 5MW des fumées dans le régénérateur et ce en prenant en compte la perte de charge lié à la présence de ce nouvel échangeur air-fumées. Ces 5MW sont alors convertis en vapeur haute pression via le catcooler afin de maintenir le bilan thermique de l'unité.

En d'autres termes, le "cat cooler" n'extrait pas seulement les calories permettant d'assurer le bilan thermique du FCC, mais une quantité supplémentaire de vapeur haute pression (6,8 t/h).

Le schéma selon l'invention permet ainsi indirectement de transformer de la vapeur basse pression peu utilisable en vapeur haute pression présentant une forte valeur ajoutée dans la mesure où cette vapeur haute pression est à un niveau thermique qui lui permet d'être une source de chaleur pour une gamme de flux process bien plus étendue que la vapeur basse pression.

Au global, le schéma selon la présente invention permet d'améliorer l'éco-efficience du procédé. Les conditions opératoire du réacteur n'étant pas modifiées, rendements et sélectivités des produits restent les mêmes.

### Exemple 3 (selon l'art antérieur) : cas de base d'une unité fonctionnant en défaut de coke

Dans cet exemple, l'unité fonctionne dans des conditions opératoires qui ne permettent pas d'assurer le bilan thermique du système. Dans ce cas, ce bilan thermique est assuré en augmentant la température de préchauffe de la charge via un four au prix d'une consommation de fuel oil.

Dans cette configuration aucun catcooler n'est requis dans la mesure où la préchauffe de la charge est assurée en consommant un minimum de fuel oil dans le four de préchauffe afin de boucler le bilan thermique.

Dans ces conditions les fumées entrent dans la chaudière de récupération cette fois à 650°C à un débit de 230 tonnes par heures.

Température et débit sont plus faibles que dans l'exemple 1 puisque une quantité moindre de coke est brûlé dans le régénérateur.

Dans cet exemple 3, les fumées suivent les mêmes étapes de post traitement que dans l'exemple 1.

Ainsi de la vapeur haute, moyenne et basse pression est générée dans les proportions suivantes :

| t/h | Chaudière recup. | Economiseur1 &2 |
|---|---|---|
| Vapeur haute pression | 71,1 | |
| Vapeur moyenne pression | 6,2 | |
| Vapeur basse pression | 0 | 15,3 |

### Exemple 4 (selon l'invention) : Mise en oeuvre de l'innovation dans le cas d'une unité fonctionnant à défaut de coke.

Dans cet exemple, l'intégration des fumées selon l'invention est mise en oeuvre.

Une fois encore les fumées sortent du post traitement dans les mêmes conditions de température et de composition que pour l'exemple 3.

Grâce à la préchauffe de l'air de combustion 4,5MW sont transférés dans le régénérateur ce qui permet de réduire la consommation de fuel oil de 395 kg/h et ce en prenant en compte la perte de charge additionnelle liée à la présence du nouvel échangeur air-fumées

La production de vapeur se répartit ainsi :

| t/h | Waste Heat boiler | Economizer1&2 |
|---|---|---|
| Vapeur haute pression | 71,1 | |
| Vapeur moyenne pression | 6,2 | |
| Vapeur basse pression | 0 | 8,8 |

Dans ce cas, le schéma selon l'invention a indirectement permis de substituer 395 kg/h du fuel oil par 6,5 t/h de vapeur basse pression qui n'aurait pu être utilisée directement pour préchauffer la charge au regard de son niveau thermique bas.

Le schéma selon l'invention permet donc une meilleure valorisation de la chaleur des fumées permettant ainsi d'améliorer l'éco-efficience du procédé.

De la même manière que pour l'exemple 2, les conditions opératoires du réacteur ("riser" ou "downer") étant maintenues identiques, l'innovation n'affecte en aucun cas les rendements et la sélectivité des produits formés.

Ces exemples illustrent de quelle manière le schéma selon l'invention permet de transférer des calories d'un niveau thermique bas vers un niveau thermique élevé permettant ainsi d'améliorer l'éco-efficience du procédé.

## Revendications

1. Procédé de craquage catalytique de coupes hydrocarbonées lourdes de type VGO ou résidu atmosphérique, utilisant une unité de craquage catalytique en lit fluidisé comportant une section réactionnelle en écoulement ascendant ou en écoulement descendant, et une section de régénération du catalyseur qui consiste en une combustion du coke déposé sur le catalyseur dans la section réactionnelle au moyen d'air de combustion préalablement comprimé dans un compresseur (MAB), la dite section de régénération générant des fumées qui échangent leurs calories dans une chaudière de récupération (WHB) qui permet de générer de la vapeur haute pression surchauffée (HPSH) à partir d'eau d'alimentation sous pression (HPBFW) et de la vapeur moyenne pression surchauffée (MPSH) à partir de vapeur moyenne pression (MPS), puis sont introduites dans un précipitateur électrostatique (ESP), puis un économiseur (ECO) qui produit de la vapeur basse pression surchauffée (LPSH) à partir d'eau à basse pression (LPBFW) et de l'eau haute pression surchauffée (HPBFW) à partir d'eau à haute pression, ledit procédé utilisant en outre un échangeur permettant de générer de la vapeur HP à partir des calories portées par le catalyseur en régénération, échangeur dit « cat cooler », le procédé étant **caractérisé en ce que** ledit air de combustion est préchauffé en aval du compresseur (MAB) à une température comprise entre 200 et 350°C et préférentiellement entre 250°C et 300°C au moyen d'un échangeur de chaleur (APH) sur les fumées de régénération situé en aval de la chaudière de récupération (WHB) et en amont de l'économiseur (ECO), fumées de combustion disponibles à cette localisation à une température comprise entre 300°C et 650°C, l'excédent de calories apportées par l'air de combustion étant converti en vapeur haute pression comprise entre 45 et 100 bars, et préférentiellement comprise entre 50 et 70 bars, au niveau de l'échangeur externe sur catalyseur chaud prélevé au régénérateur appelé "cat cooler".

2. Procédé de craquage catalytique de coupes hydrocarbonées selon la revendication 1, dans lequel l'unité de craquage catalytique fonctionne en écoulement ascendant avec les conditions opératoires suivantes :
- Température sortie riser comprise entre 520°C et 600°C,
- Rapport C/O compris entre 6 et 14, et préférentiellement compris entre 7 et 12,
- Temps de résidence compris entre 1 et 10 s, et préférentiellement compris entre 2 et 6 s.

3. Procédé de craquage catalytique de coupes hydrocarbonées selon la revendication 1, dans lequel l'unité de craquage catalytique fonctionne en écoulement descendant avec les conditions opératoires suivantes :
- Température sortie riser comprise entre 580°C et 630°C,
- Rapport C/O compris entre 15 et 40, et préférentiellement compris entre 20 et 30,
- Temps de résidence compris entre 0,1 et 1 s, et préférentiellement compris entre 0,2 et 7 s.

## Patentansprüche

1. Verfahren zum katalytischen Cracken von schweren Kohlenwasserstofffraktionen vom Typ VGO oder atmosphärischen Rückständen, das eine Einheit zum katalytischen Cracken im Fließbett verwendet, umfassend einen Reaktionsabschnitt in Aufwärtsströmung oder in Abwärtsströmung und einen Regenerationsabschnitt des Katalysators, der in einer Verbrennung des auf dem Katalysator abgelagerten Kokses im Reaktionsabschnitt mit Hilfe von vorher in einem Verdichter (MAB) verdichteter Verbrennungsluft besteht, wobei der Regenerationsabschnitt Rauchgase erzeugt, die ihre Kalorien in einem Rückgewinnungskessel (WHB) austauschen, der es ermöglicht, überhitzten Hochdruckdampf (HPSH) aus Speisewasser unter Druck (HPBFW) und überhitzten Mitteldruckdampf (MPSH) aus Mitteldruckdampf (MPS) zu erzeugen, die dann in einen elektrostatischen Abscheider (ESP), dann einen Economiser (ECO) eingeführt werden, der überhitzten Niederdruckdampf (LPSH) aus Niederdruckwasser (LPBFW) und überhitztes Hochdruckwasser (HPBFW) aus Hochdruckwasser erzeugt, wobei das Verfahren ferner einen Wärmetauscher verwendet, der es ermöglicht, Hochdruckdampf aus den Kalorien zu erzeugen, die von dem Katalysator in Regeneration, "cat cooler" Katalysator genannt, getragen werden, wobei das Verfahren **dadurch gekennzeichnet ist, dass** die Verbrennungsluft stromabwärts zum Verdichter (MAB) auf eine Temperatur zwischen 200 und 350 °C und vorzugsweise zwischen 250 und 300 °C mit Hilfe eines Wärmetauschers (APH) an den Regenerationsgasen, der sich stromabwärts zum Rückgewinnungskessel (WHB) und stromaufwärts zum Economiser (ECO) befindet, vorgewärmt wird, wobei die Verbrennungsgase an dieser Lokalisierung mit einer Temperatur zwischen 300 und 650 °C verfügbar sind, wobei die überschüssigen Kalorien, die von der Verbrennungsluft mitgeführt werden, in Hochdruckdampf zwischen 45 und 100 bar und vorzugsweise zwischen 50 und 70 bar im Bereich des externen Wärmetauschers auf einem heißen Katalysator, der dem "cat cooler" genannten Regenerator entnommen wurde, umgewandelt werden.

2. Verfahren zum katalytischen Cracken von Kohlenwasserstofffraktionen nach Anspruch 1, **dadurch gekennzeichnet, dass** die Einheit zum katalytischen Cracken in Aufwärtsströmung unter folgenden Betriebsbedingungen funktioniert:
- Riser-Ausgangstemperatur zwischen 520 und 600 °C,
- C/O-Verhältnis zwischen 6 und 14 und vorzugsweise zwischen 7 und 12,
- Aufenthaltszeit zwischen 1 und 10 s, vorzugsweise zwischen 2 und 6 s.

3. Verfahren zum katalytischen Cracken von Kohlenwasserstofffraktionen nach Anspruch 1, **dadurch gekennzeichnet, dass** die Einheit zum katalytischen Cracken in Abwärtsströmung unter folgenden Betriebsbedingungen funktioniert:
- Riser-Ausgangstemperatur zwischen 580 und 630°C,
- C/O-Verhältnis zwischen 15 und 40 und vorzugsweise zwischen 20 und 30,
- Aufenthaltszeit zwischen 0,1 und 1 s, vorzugsweise zwischen 0,2 und 7 s.

## Claims

1. Process for the catalytic cracking of heavy hydrocarbon cuts of the VGO type or atmospheric residue, using a fluidized bed catalytic cracking unit comprising a reaction section with an upward flow or with a downward flow, and a catalyst regeneration section which consists of combustion of the coke deposited on the catalyst in the reaction section by means of combustion air, previously compressed in a compressor (MAB), said regeneration section generating fumes that exchange calories in a waste heat boiler (WHB) which makes it possible to generate high-pressure superheated steam (HPSH) from feed water under pressure (HPBFW) and medium-pressure superheated steam (MPSH) from medium-pressure steam (MPS), then enter an electrostatic precipitator (ESP), then an economizer (ECO) which produces low-pressure superheated steam (LPSH) from low-pressure water (LPBFW) and high pressure superheated water (HPBFW) from high-pressure water, said process also using an exchanger making possible to generate HP steam from the calories carried by the catalyst undergoing regeneration, said exchanger referred to as a "cat cooler", the process being **characterized in that** said combustion air is preheated downstream the compressor (MAB) to a temperature comprised between 200 and 350°C and preferentially between 250°C and 300°C by means of a heat exchange (APH) using the regeneration fumes located downstream of the waste heat boiler (WHB) and upstream of the economizer (ECO), combustion fumes available at this location at a temperature comprised between 300°C and 650°C, the excess calor ies supplied by the combustion air being converted to high-pressure steam comprised between 45 and 100 bar, and preferentially comprised between 50 and 70 bar, at the level of the external exchanger on hot catalyst collected at the regenerator called a "cat cooler".

2. Process for the catalytic cracking of hydrocarbon cuts according to claim 1, in which the catalytic cracking unit operates with an upward flow with the following operating conditions:
- Temperature at the riser outlet comprised between 520°C and 600°C,
- C/O ratio comprised between 6 and 14, and preferentially comprised between 7 and 12,
- Residence time comprised between 1 and 10 s, and preferentially comprised between 2 and 6 s.

3. Process for the catalytic cracking of hydrocarbon cuts according to claim 1, in which the catalytic cracking unit operates with a downward flow with the following operating conditions:
- Temperature at the riser outlet comprised between 580°C and 630°C,
- C/O ratio comprised between 15 and 40, and preferentially comprised between 20 and 30,
- Residence time comprised between 0.1 and 1 s, and preferentially comprised between 0.2 and 7 s.
